(19) Europäisches Patentamt
European Patent Office
Office européen des brevets

(11) **EP 3 473 454 A1**

(12) **EUROPÄISCHE PATENTANMELDUNG**

(43) Veröffentlichungstag:
24.04.2019   Patentblatt 2019/17

(51) Int Cl.:
**B60C 15/06** (2006.01)   **B60C 9/00** (2006.01)

(21) Anmeldenummer: 18182330.3

(22) Anmeldetag: **09.07.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.10.2017   DE 102017218550**

(71) Anmelder: **Continental Reifen Deutschland GmbH 30165 Hannover (DE)**

(72) Erfinder: **Funk-Friedek, Sascha 30449 Hannover (DE)**

(74) Vertreter: **Finger, Karsten Continental Aktiengesellschaft Patente und Lizenzen Postfach 169 30001 Hannover (DE)**

(54)    **FAHRZEUGLUFTREIFEN**

(57)    Die Erfindung betrifft einen Fahrzeugluftreifen mit einer Radialkarkasse (2) und zwei Wulstbereichen (1), welche je einen Wulstkern (3) und einen dem Wulstkern (3) aufsitzenden Wulstkernreiter (4) aufweisen, wobei die Karkasse (2) von axial innen nach axial außen um die Wulstkerne (3) geführt ist und in einem Karkasshochschlag (2a) endet und wobei wenigstens je ein Flipper als Wulstverstärker (6) in den beiden Wulstbereichen (1) des Fahrzeugluftreifens angeordnet ist und wobei der Flipper Festigkeitsträger aufweist, welche aus mindestens einem textilen Garn bestehen.

Die Erfindung zeichnet sich dadurch aus, alle textilen Garne des Festigkeitsträgers aus dem gleichen Material bestehen und dass jedes Garn eine Feinheit < 700 dtex aufweist.

**Fig. 1**

**Beschreibung**

Die Erfindung betrifft einen Fahrzeugluftreifen mit einer Radialkarkasse und zwei Wulstbereichen, welche je einen Wulstkern und einen dem Wulstkern aufsitzenden Wulstkernreiter aufweisen, wobei die Karkasse von axial innen nach axial außen um die Wulstkerne geführt ist und in einem Karkasshochschlag endet und wobei wenigstens je ein Flipper als Wulstverstärker in den beiden Wulstbereichen des Fahrzeugluftreifens angeordnet ist und wobei der Flipper Festigkeitsträger aufweist, welche aus mindestens einem textilen Garn bestehen.

Flipper als Wulstverstärker sind dem Fachmann hinreichend bekannt. Ein Flipper ist zwischen der Karkasse und dem Wulstkern / Wulstkernreiter angeordnet und zeichnet sich dadurch aus, dass er von axial innen unterhalb des Kerns nach axial außen um diesen herumgeführt ist. Beide Enden des Flippers enden oberhalb der Querschnittshöhe des Wulstkernreiters, idealerweise 5 mm oberhalb des Wulstkernreiters, so dass diese beiden Enden des Flippers oberhalb des Wulstkernreiters auf einander rückgeführt sind. Das axial innere Ende des Flippers liegt dabei vorzugsweise mindestens 5 mm höher (Richtung Laufstreifen) als das axial äußere Ende des Flippers. Somit liegen beide Enden nicht auf einer gemeinsamen Höhe. Der Flipper ist eine gummierte Festigkeitsträgerlage, welche parallel zueinander und voneinander beanstandete Festigkeitsträger aufweist und welche ringkreisförmig im Bereich des Wulstes um den Reifen umläuft. Die Festigkeitsträger des Flippers sind in einem Winkel in Bezug auf die Festigkeitsträger der Karkasse angeordnet.

Man ist ständig bemüht, an Kosten und an Gewicht des Reifens einzusparen sowie den Rollwiderstand des Reifens zu verbessern, ohne seine übrigen Eigenschaften nachteilig zu beeinflussen.

Es ist daher die Aufgabe der Erfindung, einen Fahrzeugluftreifen zur Verfügung zu stellen, bei dem an Kosten und an Gewicht eingespart ist, der einen verbesserten Rollwiderstand aufweist, ohne dessen übrigen Eigenschaften nachteilig zu beeinflussen.

Die Aufgabe wird gelöst, indem alle textilen Garne des Festigkeitsträgers aus dem gleichen Material bestehen und dass jedes Garn eine Feinheit < 700 dtex aufweist. Maximal sind 3 Garne, vorzugsweise sind 2 Garne miteinander zum Festigkeitsträger verdreht.

Der Flipper des erfindungsgemäßen Reifens weist Festigkeitsträger von geringem Durchmesser auf, wodurch der Flipper als solches eine vergleichbar dünne Lage bildet. Es ist weniger Material eingesetzt, wodurch an Kosten und an Gewicht des Reifens eingespart ist. Zudem ist der Rollwiderstand des Reifens positiv beeinflusst. Dadurch, dass der Festigkeitsträger aus den gleichen textilen Garnen besteht, sind die Prozesskosten zur Herstellung dieses Festigkeitsträgers vergleichsweise gering.

Die Enden des Flippers reichen nicht bis unter den Gürtel, sondern maximal bis zum Reifenäquator.

In einer Ausführungsform der Erfindung weist jedes Garn eine Feinheit ≤ 500 dtex auf. Hierdurch sind Festigkeitsträger für den Flipper geschaffen, welche einen besonders geringen Durchmesser aufweisen, welches sich vorteilhaft hinsichtlich des Gewichts und somit dem Rollwiderstand des Reifens auswirkt.

Zweckmäßig ist es, wenn die Festigkeitsträger getwistete Garne sind. Verdrehte (getwistete) Garne weisen eine verbesserte Ermüdungsbeständigkeit im Vergleich zu unverdrehten Garnen auf.

Zweckmäßig ist es, wenn die Festigkeitsträger eine der Konstruktionen 1x1, 1x2 oder 1x3 aufweisen.

Vorteilhaft ist es, wenn Festigkeitsträger der Konstruktion $1 \times 1$ einen Twistfaktor $\alpha$ von 10 bis 80, vorzugsweise 30 bis 50, aufweisen, wobei $\alpha = t/m \times \sqrt{\dfrac{dtex}{10000}}$, mit t/m: Twists pro Meter und dtex: dtex des gesamten Kordes.

Ebenso vorteilhaft ist es, wenn Festigkeitsträger der Konstruktion 1x2 oder der Konstruktion 1x3 einen Twistfaktor $\alpha$ von 50 bis 300, vorzugsweise 100 bis 200, aufweisen, wobei $\alpha = t/m \times \sqrt{\dfrac{dtex}{10000}}$, mit t/m: Twists pro Meter und dtex: dtex des gesamten Kordes.

Um eine gute Gummipenetration zwischen den Festigkeitsträgern des Flippers sicherzustellen, sind die Festigkeitsträger innerhalb des Flippers unter einem lichten Abstand von mindestens 0,1 mm angeordnet.

Vorteilhaft ist es, wenn das Garn aus Polyamid, insbesondere aus Polyamid 6.6, besteht. Polyamid, insbesondere Polyamid 6.6 (PA6.6) ist kostengünstiger gegenüber Aramid und eignet sich aufgrund seiner physikalischen Eigenschaften, gegenüber Stahl und Aramid, besonders für den Einsatz als Festigkeitsträger im Flipper.

Alternativ besteht das Garn aus Polyester, Rayon oder hocharomatischem Polyamid.

Vorteilhaft ist es, wenn jedes Garn eine Feinheit von 700 dtex, 470 dtex, 312 dtex oder 235 dtex aufweist und/ oder wenn die Festigkeitsträger im Flipper in einer Dichte von 80 bis 130 epdm angeordnet sind.

In einer bevorzugten Ausführung der Erfindung weist der Flipper Festigkeitsträger aus Polyamid, vorzugsweise aus PA 6.6 mit der Konstruktion 470x2 und in einer Dichte von 80 bis 130 epdm auf. Je nach Kraft-Dehnungseigenschaften der Polyamid-Festigkeitsträger, welche durch den Herstellprozeß des Polyamid-Garnes einstellbar sind, können die Festigkeitsträger nach Erfordernis dichter oder weniger dicht in dem Flipper angeordnet sein.

"epdm" steht für ends per decimenter und gibt die Dichte an, in der die Festigkeitsträger in der Verstärkungslage angeordnet sind.

Vorteilhaft ist es, wenn der Flipper einlagig ausgebildet ist, da hierdurch bereits ein ausreichender Kreuzverband mit der Karkasslage gebildet wird. In einem Flipper sind die Festigkeitsträger in einem Winkel von 30° bis 60° in Bezug auf die Reifenumfangsrichtung angeordnet. Weitere Lagen würden Gewicht, Kosten und Rollwiderstand des Reifens erhöhen, aber nicht im gleichen Maße die Wirksamkeit bezüglich der Fahreigenschaften verbessern.

Radialreifen für PKW weisen üblicherweise eine Gürtelbandage auf. Vorteilhaft ist es, wenn diese Gürtelbandage die gleichen Festigkeitsträger wie der Flipper aufweist. Hierdurch sind Reifenherstellungskosten eingespart, da für die Gürtelbandage und den Flipper das gleiche Ausgangsmaterial, insbesondere die gleiche kalandrierte Festigkeitsträgerlage, welche lediglich unter einem anderen Winkel geschnitten wird, verwendet werden kann.

Weitere Merkmale, Vorteile und Einzelheiten der Erfindung werden nun anhand einer einzigen Zeichnung, welche ein schematisches Ausführungsbeispiel darstellt, näher beschrieben.

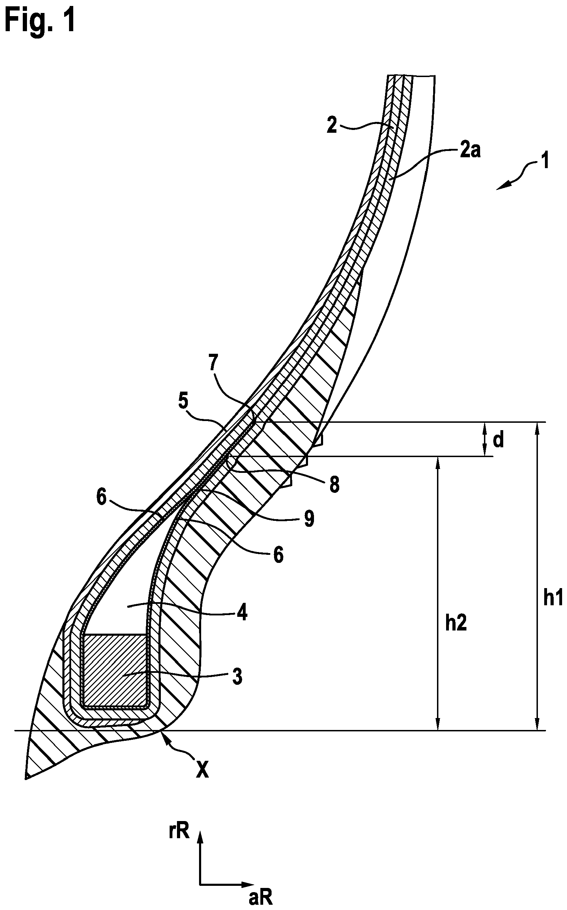

Die Fig. 1 zeigt einen Querschnitt durch den Wulstbereich eines erfindungsgemäßen Fahrzeugluftreifens, hier eines PKW-Reifens radialer Bauart. Der PKW-Reifen weist eine übliche Standardkonstruktion auf, mit zwei Seitenwänden, einem Kronenbereich, mit einer Karkasse 2, welche die Wulstkerne 3 und die den Wulstkernen 3 aufsitzenden Wulstkernreiter 4 von axial innen nach axial außen umläuft und in einem Karkasshochschlag 2a endet, mit einer luftdicht ausgeführten Innenschicht 5, einem mehrlagigen Gürtel und einem Laufstreifen.

Der Wulstbereich 1 weist einen einlagig ausgeführten Flipper 6 auf. Der Flipper 6 ist zwischen Karkasse 2 und Wulstkern 3 / Wulstkernreiter 4 angeordnet. Das axial innere Ende des Flippers 7 liegt oberhalb und somit außerhalb der Querschnittshöhe des Wulstkernreiters 4 und der Flipper 6 umläuft in seinem Verlauf den Wulstkern 3 von axial innen nach axial außen, wobei das axial äußere Ende des Flippers 8 ebenfalls oberhalb und somit außerhalb der Querschnittshöhe des Wulstkernreiters 4 liegt. Das axial innere Ende des Flippers 7 ist in einer Querschnittshöhe h1 angeordnet, welche mindestens 10 mm oberhalb des oberen Endes des Wulstkernreiters 9 liegt, wobei das axial äußere Ende des Flippers 8 in einer Querschnittshöhe h2 angeordnet ist, welche mindestens 5 mm oberhalb des oberen Endes des Wulstkernreiters 9 liegt. Zudem weisen die Querschnittshöhen des axial inneren Endes h1 und die des axial äußeren Endes des Flippers h2 einen radialen Abstand d von mindestens 5 mm auf. Die Höhe h1 beträgt 30mm und die Höhe h2 beträgt 25mm. Die angegebenen Höhen h1,2 werden ausgehend von einer in axialer Richtung durch den Felgeneckpunkt X verlaufenden Linie in radialer Richtung gemessen.

Der Flipper 6 weist Festigkeitsträger aus PA 6.6 der Konstruktion 470x2 auf. Die Festigkeitsträger bestehen also jeweils aus zwei PA 6.6-Garnen der Feinheit 470 dtex, welche miteinander verdreht sind. Die Corde schließen einen Winkel $\alpha$ von 30° bis 60° mit der Umfangsrichtung ein. Die Corde sind in einer Dichte von 130 epdm im Flipper 6 angeordnet.

## Bezugszeichenliste

(Teil der Beschreibung)

| 1 | Wulstbereich |
|---|---|
| 2 | Karkasse |
| 2a | Karkasshochschlag |
| 3 | Wulstkern |
| 4 | Wulstkernreiter |
| 5 | Innenschicht |
| 6 | Flipper |
| 7 | Axial inneres Ende des Flippers |
| 8 | Axial äußeres Ende des Flippers |
| 9 | Oberes Ende des Wulstkernreiters |

| h1 | Querschnittshöhe |
|---|---|
| h2 | Querschnittshöhe |
| d | Radialer Abstand |
| X | Felgeneckpunkt |

| rR | radiale Richtung |
|---|---|
| aR | axiale Richtung |

## Patentansprüche

1. Fahrzeugluftreifen mit einer Radialkarkasse (2) und zwei Wulstbereichen (1), welche je einen Wulstkern (3) und einen dem Wulstkern (3) aufsitzenden Wulstkernreiter (4) aufweisen, wobei die Karkasse (2) von axial innen nach axial außen um die Wulstkerne (3) geführt ist und in einem Karkasshochschlag (2a) endet und wobei wenigstens je ein Flipper als Wulstverstärker (6) in den beiden Wulstbereichen (1) des Fahrzeugluftreifens angeordnet ist und wobei der Flipper Festigkeitsträger aufweist, welche aus mindestens einem textilen Garn bestehen, **dadurch gekennzeichnet, dass** alle textilen Garne des Festigkeitsträgers aus dem gleichen Material bestehen und dass jedes Garn eine Feinheit < 700 dtex aufweist.

2. Fahrzeugluftreifen nach Anspruch 1, **dadurch gekennzeichnet, dass** jedes Garn eine Feinheit ≤ 500 dtex aufweist.

3. Fahrzeugluftreifen nach Anspruch 1 oder 2, **dadurch gekennzeichnet, dass** die Festigkeitsträger getwistete Garne sind.

4. Fahrzeugluftreifen nach einem der Ansprüche 1 bis 3, **dadurch gekennzeichnet, dass** die Festigkeitsträger eine der Konstruktionen 1x1, 1x2 oder 1x3 aufweisen.

5. Fahrzeugluftreifen nach Anspruch 4, **dadurch gekennzeichnet, dass** Festigkeitsträger der Konstruktion $1 \times 1$ einen Twistfaktor $\alpha$ von 10 bis 80, vorzugsweise 30 bis 50, aufweisen, wobei

$$\alpha = t/m \times \sqrt{\frac{dtex}{10000}},$$ mit t/m: Twists pro Meter und dtex: dtex des gesamten Kordes.

6. Fahrzeugluftreifen nach Anspruch 4, **dadurch gekennzeichnet, dass** Festigkeitsträger der Konstruktion 1x2 oder der Konstruktion 1x3 einen Twistfaktor $\alpha$ von 50 bis 300, vorzugsweise 100 bis 200,

aufweisen, wobei $\alpha = t/m \times \sqrt{\frac{dtex}{10000}},$ mit t/m:

Twists pro Meter und dtex: dtex des gesamten Kordes.

7. Fahrzeugluftreifen nach einem der Ansprüche 1 bis 6, **dadurch gekennzeichnet, dass** die Festigkeitsträger innerhalb des Flippers (6) unter einem lichten Abstand von mindestens 0,1 mm angeordnet sind.

8. Fahrzeugluftreifen nach einem der Ansprüche 1 bis 7, **dadurch gekennzeichnet, dass** das Garn aus Polyamid, insbesondere aus Polyamid 6.6, besteht.

9. Fahrzeugluftreifen nach einem der Ansprüche 1 bis 7, **dadurch gekennzeichnet, dass** das Garn aus Polyester, Rayon oder hocharomatischem Polyamid besteht.

10. Fahrzeugluftreifen nach einem der Ansprüche 1 bis 9, **dadurch gekennzeichnet, dass** jedes Garn eine Feinheit von 700 dtex, 470 dtex, 312 dtex oder 235 dtex aufweist.

11. Fahrzeugluftreifen nach einem oder mehreren der vorangehenden Ansprüche, **dadurch gekennzeichnet, dass** die Festigkeitsträger im Flipper (6) in einer Dichte von 80 bis 130 epdm angeordnet sind.

12. Fahrzeugluftreifen nach einem oder mehreren der vorangehenden Ansprüche, **dadurch gekennzeichnet, dass** der Flipper (6) Festigkeitsträger aus Polyamid, vorzugsweise aus PA 6.6 mit der Konstruktion 470 dtex x2 und in einer Dichte von 80 bis 130 epdm aufweist.

13. Fahrzeugluftreifen nach einem oder mehreren der vorangehenden Ansprüche, **dadurch gekennzeichnet, dass** der Flipper (6) einlagig ausgebildet ist und der alleinige Wulstverstärker ist.

14. Fahrzeugluftreifen nach einem oder mehreren der vorangehenden Ansprüche, **dadurch gekennzeichnet, dass** der Fahrzeugluftreifen eine Gürtelbandage aufweist, welche die gleichen Festigkeitsträger in gleichem Abstand zueinander wie der Flipper (6) aufweist.

# Fig. 1

Europäisches
Patentamt

European
Patent Office

Office européen
des brevets

**EUROPÄISCHER RECHERCHENBERICHT**

Nummer der Anmeldung

EP 18 18 2330

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/162343 A1 (CONTINENTAL REIFEN DEUTSCHLAND GMBH [DE]) 28. September 2017 (2017-09-28) * Zusammenfassung; Ansprüche 1-13; Abbildungen 1-3 * * Seite 2, Zeile 9 - Zeile 10 * * Seite 4, Zeile 21 - Seite 5, Zeile 27 * ----- | 1-14 | INV. B60C15/06 B60C9/00 |
| X,P | EP 3 254 870 A1 (CONTINENTAL REIFEN DEUTSCHLAND GMBH [DE]) 13. Dezember 2017 (2017-12-13) * Zusammenfassung; Ansprüche 1-12 * * Absatz [0024] - Absatz [0034] * ----- | 1-4,6, 8-12 | |

RECHERCHIERTE
SACHGEBIETE (IPC)

B60C

Der vorliegende Recherchenbericht wurde für alle Patentansprüche erstellt

| Recherchenort | Abschlußdatum der Recherche | Prüfer |
|---|---|---|
| München | 28. Januar 2019 | Ozdemir, Anil |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
......................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 2330

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-01-2019

| Im Recherchenbericht angeführtes Patentdokument | Datum der Veröffentlichung | Mitglied(er) der Patentfamilie | Datum der Veröffentlichung |
|---|---|---|---|
| WO 2017162343 A1 | 28-09-2017 | DE 102016204925 A1<br>EP 3433110 A1<br>WO 2017162343 A1 | 28-09-2017<br>30-01-2019<br>28-09-2017 |
| EP 3254870 A1 | 13-12-2017 | CN 109195812 A<br>EP 3254870 A1<br>WO 2017211546 A1 | 11-01-2019<br>13-12-2017<br>14-12-2017 |

Für nähere Einzelheiten zu diesem Anhang : siehe Amtsblatt des Europäischen Patentamts, Nr.12/82

EPO FORM P0461